# FASCICULE DE BREVET EUROPEEN

(11) **EP 1 522 479 B1**
(45) Date de publication et mention de la délivrance du brevet: **06.12.2006**
(21) Numéro de dépôt: 04023657.2
(22) Date de dépôt: 05.10.2004
(51) Int. Cl.: B60T 13/573

(54) **Servomoteur d'assistance pneumatique au freinage, en particulier pour véhicule automobile**
Vakuum Bremskraftverstärker, insbesondere für ein Kraftfahrzeug
Vacuum brake booster, especially for a vehicle

(30) Priorité: 06.10.2003 FR 0311694
(43) Date de publication de la demande: 13.04.2005
(73) Titulaire: ROBERT BOSCH GMBH, 70442 Stuttgart (DE)
(72) Inventeur: Simon Bacardit, Juan, 08013 Barcelone (ES)
(74) Mandataire: Hurwic, Aleksander Wiktor

(56) Documents cités:
- DE-A- 19 929 658
- FR-A- 2 809 068
- FR-A- 2 817 818
- US-A- 5 263 398

## Description

L'invention concerne un servomoteur d'assistance pneumatique au freinage, en particulier pour véhicule automobile.

Le circuit de freinage d'un véhicule automobile comprend en général un servomoteur d'assistance pneumatique qui est monté entre une tige de commande actionnée par la pédale de frein et un maître-cylindre tandem monté dans un circuit hydraulique d'alimentation des freins du véhicule.

Le servomoteur comprend, de façon classique, une enveloppe rigide partagée en une chambre de dépression et une chambre de travail par une membrane étanche qui porte un piston axial interposé entre la tige de commande reliée à la pédale de frein et une tige de poussée agissant sur le piston primaire du maître-cylindre tandem.

Un disque de réaction en matériau sensiblement incompressible tel que du caoutchouc ou un élastomère est monté dans une cuvette à l'extrémité de la tige de poussée et s'applique sur le piston axial du servomoteur et sur un plongeur qui est monté à l'extrémité de la tige de commande et qui est guidé en translation dans un passage axial du piston du servomoteur.

Le rapport d'assistance fourni par le servomoteur dépend des surfaces d'application des efforts exercés sur le disque de réaction, d'un côté par le piston du servomoteur et par le plongeur et, de l'autre côté, par la tige de poussée.

Le document DE 199 29 658 divulgue un servomoteur d'assistance pneumatique selon le préambule de la revendication 1. En plus, dans ce document, un élément axial de dilatation thermique est arrangé entre la tige de commande et le disque de réaction.

On a déjà proposé des moyens permettant d'augmenter le rapport d'assistance en cas de freinage d'urgence, ces moyens comprenant une capsule élastiquement déformable réalisée par exemple en acier à ressort à l'intérieur de laquelle est monté le disque de réaction. La capsule est montée axialement coulissante sur l'extrémité de la tige de poussée qui comporte un épaulement destiné à venir en appui sur une extrémité de la capsule après effacement d'un jeu axial, en freinage d'urgence.

Lors d'un freinage normal, l'effort de réaction du circuit de freinage est transmis par l'extrémité de la tige de poussée qui coulisse dans une extrémité cylindrique de la capsule et qui s'appuie directement sur le disque de réaction, le rapport d'assistance étant alors déterminé par la surface radiale de l'extrémité de la tige de poussée.

Lors d'un freinage d'urgence, le jeu axial entre l'épaulement de la tige de poussée et la capsule est effacé et l'effort de réaction du circuit de freinage est transmis, non plus par l'extrémité de la tige de poussée, mais par toute la surface radiale de la capsule qui est supérieure à la surface radiale de l'extrémité de la tige de poussée, ce qui augmente le rapport d'assistance.

Dans ce système connu, c'est le jeu axial entre l'épaulement de la tige de poussée et l'extrémité de la capsule qui détermine le point de changement de rapport d'assistance.

On a constaté que ce point pouvait changer en fonction de la température de fonctionnement du servomoteur parceque la dilatation thermique du disque de réaction avait un effet non négligeable sur le jeu axial précité, qui augmentait en même temps que la température de fonctionnement.

La présente invention a notamment pour but d'apporter une solution simple, efficace et peu coûteuse à ce problème.

Elle a pour objet un servomoteur d'assistance pneumatique du type précité, qui comprend des moyens de modification du rapport d'assistance en cas de freinage d'urgence dont la sensibilité aux variations de la température de fonctionnement est nulle ou au moins très inférieure à celle des servomoteurs de la technique antérieure.

Elle propose à cet effet un servomoteur d'assistance pneumatique au freinage, en particulier pour véhicule automobile, comprenant un piston axial venant en appui sur une tige de poussée par l'intermédiaire d'un disque de réaction en matériau sensiblement incompressible porté par la tige de poussée, ce disque de réaction coopérant également avec un plongeur monté à l'extrémité d'une tige de commande et qui est guidé en coulissement dans un passage axial du piston, caractérisé en ce que la tige de poussée porte un élément axial de dilatation thermique monté entre une butée solidaire de la tige de poussée et un élément d'appui sur le disque de réaction, avec un jeu axial entre l'élément de dilation thermique, l'élément d'appui, la butée de la tige de poussée et le disque de réaction, ce jeu axial déterminant un point de changement de rapport d'assistance, ledit élément de dilatation thermique ayant sur ce jeu axial, lors des variations de la température de fonctionnement, une influence opposée à celle du disque de réaction.

Dans le servomoteur selon l'invention, la dilatation thermique de l'élément porté par la tige de poussée permet de compenser, au moins en partie, la dilatation thermique du disque de réaction, de sorte que les effets des variations de la température de fonctionnement du servomoteur sur le point de changement du rapport d'assistance sont sensiblement annulés ou au moins réduits de façon très importante.

Le fonctionnement du servomoteur en freinage d'urgence est ainsi rendu moins sensible aux variations de température.

En outre, les moyens permettant d'obtenir ce résultat sont applicables sans difficulté et de façon peu coûteuse aux servomoteurs préexistants.

Selon une autre caractéristique de l'invention, l'élément de dilatation thermique coopère par butée avec une pièce annulaire métallique portée par la tige de poussée et contenant le disque de réaction.

Cette pièce annulaire est montée axialement coulissante sur la tige de poussée et comporte une extrémité cylindrique qui a un diamètre inférieur à celui du disque de réaction et qui est guidée en translation axiale sur une extrémité correspondante de la tige de poussée qui s'étend à travers cette extrémité cylindrique de la pièce annulaire et qui vient en appui sur le disque de réaction.

Dans une première forme de réalisation de l'invention, l'élément de dilatation thermique est tubulaire et entoure extérieurement la tige de poussée.

Dans ce cas, l'élément de dilatation thermique vient en appui sur la pièce annulaire qui contient le disque de réaction.

Dans une autre forme de réalisation de l'invention, l'élément de dilatation thermique est monté à l'intérieur d'une partie tubulaire de la tige de poussée et est traversé axialement par un doigt solidaire de la tige de poussée et qui vient en appui sur le disque de réaction.

Dans cette forme de réalisation, l'élément d'appui associé à l'élément de dilatation est monté autour du doigt précité entre l'élément de dilatation et la pièce annulaire et est formé d'une bague cylindrique dont une extrémité est en appui sur l'élément de dilatation thermique et dont l'autre extrémité porte un rebord radial s'appliquant sur l'extrémité cylindrique de la pièce annulaire contenant le disque de réaction.

Dans ces deux formes de réalisation, l'élément de dilatation thermique est réalisé en un matériau présentant un coefficient de dilatation thermique approprié correspondant plus ou moins à celui du disque de réaction, et ses dimensions axiales sont déterminées pour que sa dilatation thermique axiale équilibre au moins approximativement celle du disque de réaction sur une très large plage de températures qui est par exemple d'environ - 40° C à + 120°C.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en coupe axiale d'un servomoteur selon l'invention ;
- La figure 2 est une vue schématique partielle en coupe axiale à plus grande échelle, représentant l'extrémité de la tige de poussée, la pièce annulaire contenant le disque de réaction et l'extrémité du plongeur porté par la tige de commande ;
- La figure 3 est une vue correspondant à la figure 2 et représentant une variante de réalisation de l'invention.

Par convention, dans la description qui suit, ce qui se trouve à gauche sur les dessins sera décrit comme étant à l'avant, et ce qui se trouve à droite sera décrit comme étant à l'arrière.

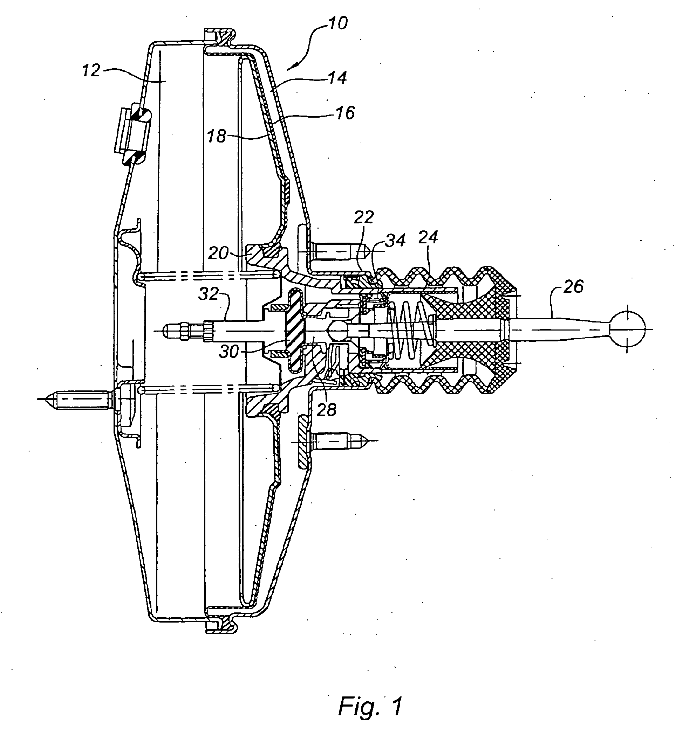

On se réfère d'abord à la figure 1 qui représente schématiquement en coupe axiale un servomoteur d'assistance pneumatique d'un circuit de freinage pour véhicule automobile.

Ce servomoteur comprend une enveloppe rigide 10 dont le volume interne est partagé en une chambre avant 12 ou chambre de dépression et une chambre arrière 14 ou chambre de travail par une membrane 16 souple et étanche, par exemple en caoutchouc, en élastomère ou analogue, qui repose sur une jupe rigide 18 et qui est fixée à sa périphérie externe sur l'enveloppe 10.

La périphérie interne de la membrane 16 est fixée avec la périphérie interne de la jupe 18 sur un piston axial 20 guidé en translation axiale dans une cheminée cylindrique 22 qui s'étend vers l'arrière depuis l'enveloppe 10.

Une partie tubulaire 24 d'extrémité arrière du piston 20 s'étend à l'extérieur de la cheminée et reçoit une tige de commande 26 qui est guidée en translation axiale à l'intérieur du piston et qui est reliée à son extrémité arrière à une pédale de frein non représentée, tandis que son extrémité avant porte un plongeur 28 guidé en translation axiale par rapport au piston 20. Le plongeur 28 est destiné à venir en appui sur un disque de réaction 30 en matériau sensiblement incompressible, par exemple en caoutchouc ou en élastomère qui est monté à l'extrémité d'une tige axiale de poussée 32 coopérant avec le piston primaire d'un maître-cylindre tandem non représenté faisant partie d'un circuit hydraulique d'alimentation des freins du véhicule en liquide de frein sous pression.

De façon connue, la chambre avant 12 du servomoteur 10 est reliée à une source de dépression, telle par exemple que le collecteur d'admission du véhicule automobile, tandis que la chambre arrière 14, soit est reliée à la chambre avant 12 au repos, soit est alimentée progressivement en air à la pression ambiante lors d'un freinage.

Une valve à trois voies 34 est montée à l'intérieur de la partie tubulaire 24 du piston 20 et est actionnée par la tige de commande 26 pour, lors d'un freinage, fermer d'abord la communication entre les deux chambres 12 et 14 puis ouvrir progressivement un passage de liaison de la chambre arrière 14 à l'atmosphère ambiante.

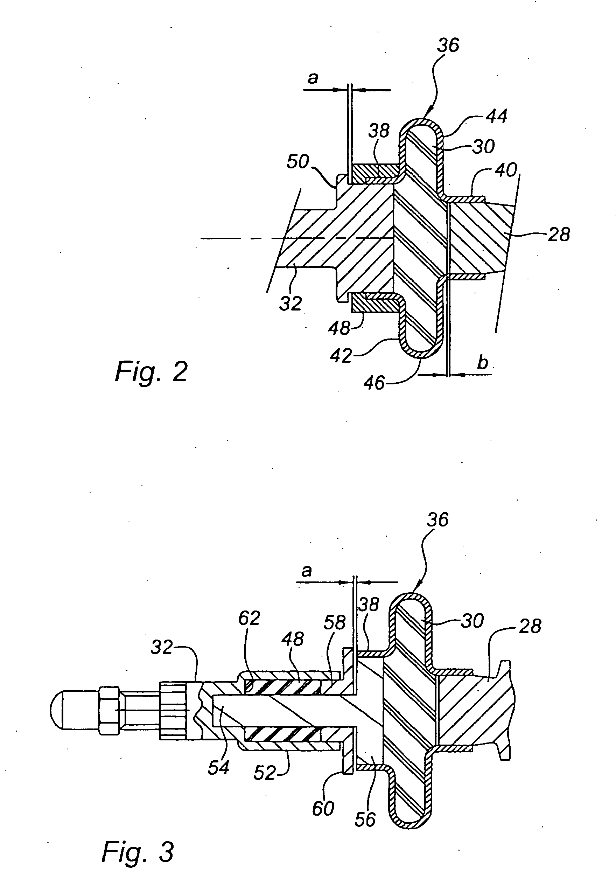

Dans le servomoteur selon l'invention, et comme on le verra mieux en figure 2, le disque de réaction 30 est logé à l'intérieur d'une pièce annulaire 36 élastiquement déformable réalisée par exemple en acier à ressort, dont une extrémité cylindrique avant 38 est montée axialement coulissante sur l'extrémité de la tige de poussée 32 et dont une extrémité cylindrique arrière 40 forme un guidage en translation axiale de l'extrémité avant du plongeur 28 porté par la tige de commande 26.

La pièce annulaire 36 comprend encore une face radiale avant 42 qui est raccordée à l'extrémité cylindrique avant 38 et une face radiale arrière 44 qui est raccordée à l'extrémité cylindrique arrière 40. Ces deux faces radiales 42 et 44 sont reliées par une paroi périphérique 46 de forme arrondie à concavité tournée vers l'intérieur. Comme on le voit bien en figure 2, l'espace délimité par les faces radiales 42 et 44 et la surface cylindrique 46 de la pièce annulaire 36 est rempli entièrement par le disque de réaction 30. L'extrémité arrière de la tige de poussée 32 et l'extrémité avant du plongeur 28 guidées en translation dans les extrémités cylindriques 38 et 40 respectivement de la pièce annulaire 36, peuvent venir directement en appui sur des faces radiales du disque de réaction 30.

Un élément tubulaire 48 de dilatation thermique est monté autour de l'extrémité cylindrique arrière de la tige de poussée 32, entre une butée 50 formée par un épaulement de la tige de poussée 32 et la face radiale avant 42 de la pièce annulaire 36 avec au repos un jeu axial a entre la butée 50, l'élément 48 de dilatation thermique et la face radiale avant 42 de la pièce annulaire 36.

De façon connue, un autre jeu axial b existe au repos entre l'extrémité avant du plongeur 28 et le disque de réaction 30.

L'élément 48 de dilatation thermique est réalisé en une matière rigide ayant un coefficient de dilatation thermique en direction axiale permettant de compenser la dilatation thermique axiale du disque de réaction 30 lors des variations de la température de fonctionnement du servomoteur.

En effet, quand le disque de réaction 30 se dilate axialement par suite d'une élévation de la température ambiante, il prend appui sur l'extrémité arrière de la tige de poussée 32, et tend à déplacer vers l'arrière la face radiale arrière 44 de la pièce annulaire 36 ce qui a pour effet d'augmenter la distance entre la butée 50 de la tige de poussée 32 et l'extrémité cylindrique avant 38 de la pièce annulaire 36, et donc d'augmenter le jeu axial a précité.

La dilatation thermique axiale de l'élément 48 a un effet opposé sur ce jeu axial a, puisque l'augmentation de la longueur axiale de l'élément 48 provoquée par une augmentation de la température a pour effet de réduire le jeu axial a. La somme de la réduction et de l'augmentation du jeu axial a dues aux augmentations de longueur axiale de l'élément 48 et du disque de réaction 30 peut donc être sensiblement nulle lorsque les caractéristiques dimensionnelles et de dilatation thermique de l'élément 48 sont correctement choisies.

En fonctionnement, lors d'un freinage normal, la réaction du circuit hydraulique est transmise au disque de réaction 30 par l'extrémité arrière de la tige de poussée 32 et cette réaction est transmise par le disque 30 au plongeur 28 qui est appliqué sur le disque de réaction, le jeu b étant effacé.

Lors d'un freinage d'urgence, l'épaulement 50 de la tige de poussée 32 vient s'appuyer sur l'extrémité de l'élément 48 qui est lui-même en appui sur la face radiale avant 42 de la partie annulaire 36 contenant le disque de réaction, et la réaction du circuit hydraulique de freinage est appliquée au disque de réaction sur la plus grande surface radiale de la pièce annulaire 36. Il en résulte une augmentation du rapport d'assistance.

Le jeu axial a étant maintenu sensiblement constant lors des variations de la température de fonctionnement, le changement de rapport d'assistance se produit toujours dans les mêmes conditions de freinage.

Dans la variante de réalisation représentée schématiquement en figures 3, l'élément tubulaire 48 de dilatation thermique est logé dans une partie tubulaire d'extrémité arrière 52 de la tige de poussée 32 et est traversé axialement par un doigt cylindrique 54 solidaire de la tige de poussée, ce doigt 54 se terminant par une rondelle 56 d'application sur le disque de réaction 30, cette rondelle 56 étant guidée en translation axiale dans l'extrémité cylindrique avant 38 de la pièce annulaire 36 contenant le disque de réaction.

Un élément d'appui formé par une bague cylindrique 58 est monté à l'intérieur de l'extrémité tubulaire 52 de la tige de poussée, entre l'élément 48 de dilatation thermique et l'extrémité cylindrique avant 38 de la pièce annulaire 36, cette bague 58 comportant à son extrémité arrière un rebord radial 60 dont le diamètre extérieur est légèrement supérieur à celui de l'extrémité cylindrique avant 38 de la pièce 36.

Le jeu axial a précité est formé entre la face avant de l'extrémité cylindrique 38 de la pièce 36, le rebord radial 60 de la bague 58, l'élément 48 de dilatation thermique et le fond 62 de la partie tubulaire 52 de la tige de poussée 32 qui reçoit l'élément 48 de dilatation thermique.

Dans ce mode de réalisation, comme l'élément 48 de dilatation thermique est enfermé dans un espace clos, cet élément peut être formé du même matériau sensiblement incompressible que le disque de réaction 30.

En fonctionnement, lors d'un freinage normal, la réaction du circuit hydraulique est transmise au disque de réaction 30 par la rondelle d'extrémité arrière 56 du doigt 54. Lors d'un freinage d'urgence, le rebord radial 60 de l'élément d'appui 58 est appliqué sur l'extrémité avant cylindrique 38 de la partie annulaire 36 et la réaction du circuit hydraulique est appliquée au disque de réaction 30 par la surface de plus grand diamètre de la pièce annulaire 36.

Les variations de la température de fonctionnement ont sur le disque de réaction 30 et sur l'élément 48, des effets qui se compensent et s'annulent approximativement au niveau du jeu axial a.

Comme déjà indiqué, le fait que l'élément 48 de dilatation thermique est entièrement contenu dans un espace clos permet d'utiliser pour cet élément un matériau sensiblement incompressible tel que du caoutchouc, un élastomère ou analogue, qui peut être identique ou semblable à celui du disque de réaction.

## Revendications

1. Servomoteur d'assistance pneumatique au freinage en particulier pour véhicule automobile, comprenant un piston axial (20) venant en appui sur une tige de poussée (32) par l'intermédiaire d'un disque de réaction (30) en matériau sensiblement incompressible porté par la tige de poussée, ce disque de réaction coopérant également avec un plongeur (28) monté à l'extrémité d'une tige de commande (26) et qui est guidé en coulissement dans un passage axial du piston (20), **caractérisé en ce que** la tige de poussée (32) porte un élément axial (48) de dilatation thermique monté entre une butée (50, 62) solidaire de la tige de poussée (32) et un élément (58, 42) d'appui sur le disque de réaction (30), avec un jeu axial a entre l'élément (48) de dilation thermique, l'élément d'appui (58, 42), la butée (50, 62) de la tige de poussée et le disque de réaction (30), ce jeu axial déterminant un point de changement de rapport d'assistance, ledit élément (48) de dilatation thermique ayant sur ce jeu axial, lors des variations de température, un effet opposé à celui du disque de réaction (30).

2. Servomoteur selon la revendication 1, **caractérisé en ce que** l'élément (48) de dilatation thermique coopère par butée avec une pièce annulaire (36) portée par la tige de poussée et contenant le disque de réaction (30).

3. Servomoteur selon la revendication 2, **caractérisé en ce que** la pièce annulaire (36) est axialement coulissante sur la tige de poussée (32).

4. Servomoteur selon la revendication 2 ou 3, **caractérisé en ce que** la pièce annulaire (36) comprend une extrémité cylindrique (48) qui a un diamètre inférieur à celui du disque de réaction (30) et qui est guidé en translation axiale sur une extrémité de la tige de poussée (32) qui vient en appui sur le disque de réaction.

5. Servomoteur selon l'une des revendications précédentes, **caractérisé en ce que** l'élément (48) de dilatation thermique est tubulaire et entoure extérieurement la tige de poussée (32).

6. Servomoteur selon l'ensemble des revendications 4 et 5, **caractérisé en ce que** l'élément (48) de dilatation thermique vient en appui sur la pièce annulaire (36) du côté de la tige de poussée (32).

7. Servomoteur selon l'une des revendications 1 à 4, **caractérisé en ce que** l'élément (48) de dilatation thermique est monté à l'intérieur d'une partie tubulaire (52) de la tige de poussée et est traversée axialement par un doigt (54) solidaire de la tige de poussée et qui vient en appui sur le disque de réaction (30).

8. Servomoteur selon la revendication 7, **caractérisé en ce que** l'élément (48) de dilatation thermique est associé à un élément d'appui (58) qui est monté autour du doigt (54) entre l'élément (48) de dilatation thermique et la pièce annulaire (36).

9. Servomoteur selon l'une des revendications 4 à 8, **caractérisé en ce que** la pièce annulaire (36) comporte une autre extrémité cylindrique (40) de guidage en translation axiale du plongeur (28) précité.

10. Servomoteur selon l'une des revendications 2 à 9, **caractérisé en ce que** la pièce annulaire (36) est en acier à ressort.

## Claims

1. Pneumatic brake booster, in particular for a motor vehicle, comprising an axial piston (20) bearing on a thrust rod (32) by the intermediary of a reaction disk (30) made of substantially incompressible material and carried by the thrust rod, this reaction disk also cooperating with a plunger (28) mounted at the end of a control rod (26) and which is guided in a sliding manner in an axial passage of the piston (20), **characterized in that** the thrust rod (32) carries an axial thermal expansion element (48) mounted between a stop (50, 62) integral with the thrust rod (32) and a bearing element (58, 42) on the reaction disk (30), with an axial play a between the thermal expansion element (48), the bearing element (58, 42), the stop (50, 62) of the thrust rod and the reaction disk (30), this axial play determining a point of change of assistance ratio, the said thermal expansion element (48) having on this axial play, during variations in the operating temperature, an effect opposite to that of the reaction disk (30).

2. Booster according to claim 1, **characterized in that** the thermal expansion element (48) cooperates by bearing against an annular part (36) carried by the thrust rod and containing the reaction disk (30).

3. Booster according to claim 2, **characterized in that** the annular part (36) slides axially over the thrust rod (32).

4. Booster according to claim 2 or 3, **characterized in that** the annular part (36) comprises a cylindrical end (48) which has a diameter less than that of the reaction disk (30) and which is guided in axial translation over an end of the thrust rod (32) which bears against the reaction disk.

5. Booster according to one of the preceding claims, **characterized in that** the thermal expansion element (48) is tubular and externally surrounds the thrust rod (32).

6. Booster according to both of claims 4 and 5, **characterized in that** the thermal expansion element (48) bears against the annular part (36) on the side facing the thrust rod (32).

7. Booster according to one of claims 1 to 4, **characterized in that** the thermal expansion element (48) is mounted inside a tubular part (52) of the thrust rod and is traversed axially by a finger (54) integral with the thrust rod and which bears against the reaction disk (30).

8. Booster according to claim 7, **characterized in that** the thermal expansion element (48) is associated with a bearing element (58) which is mounted around the finger (54) between the thermal expansion element (48) and the annular part (36).

9. Booster according to one of claims 4 to 8, **characterized in that** the annular part (36) comprises another cylindrical end (40) for guiding the said plunger (28) in axial translation.

10. Booster according to one of claims 2 to 9, **characterized in that** the annular part (36) is made of spring steel.

## Patentansprüche

1. Pneumatischer Servomotor zur Bremsunterstützung, insbesondere für ein Kraftfahrzeug, mit einem axialen Kolben (20), der über eine von einer Schubstange (32) getragene Reaktionsscheibe (30) aus im Wesentlichen nicht zusammendrückbarem Material an die Schubstange in Anlage gelangt, wobei diese Reaktionsscheibe auch mit einem Tauchkolben (28) zusammenwirkt, der am Ende einer Steuerstange (26) angebracht und in einem axialen Durchgang des Kolbens (20) gleitend geführt ist, **dadurch gekennzeichnet, dass** die Schubstange (32) ein axiales Wärmedehnungselement (48) trägt, das zwischen einem fest mit der Schubstange (32) verbundenen Anschlag (50, 62) und einem Element (58, 42) zur Anlage an der Reaktionsscheibe (30) angebracht ist, wobei zwischen dem Wärmedehnungselement (48), dem Anlageelement (58, 42), dem Anschlag (50, 62) der Schubstange und der Reaktionsscheibe (30) ein axiales Spiel a besteht, dieses axiale Spiel einen Punkt zur Veränderung des Unterstützungsverhältnisses bestimmt und das Wärmedehnungselement (48) während den Temperaturschwankungen eine zur Wirkung der Reaktionsscheibe (30) entgegengesetzte Wirkung auf dieses axiale Spiel hat.

2. Servomotor nach Anspruch 1, **dadurch gekennzeichnet, dass** das Wärmedehnungselement (48) durch Anschlag mit einem ringförmigen Teil (36) zusammenwirkt, das von der Schubstange getragen ist und die Reaktionsscheibe (30) enthält.

3. Servomotor nach Anspruch 2, **dadurch gekennzeichnet, dass** das ringförmige Teil (36) an der Schubstange (32) axial gleitet.

4. Servomotor nach Anspruch 2 oder 3, **dadurch gekennzeichnet, dass** das ringförmige Teil (36) ein zylindrisches Ende (48) aufweist, dessen Durchmesser kleiner ist als der der Reaktionsscheibe (30) und das an einem Ende der Schubstange (32), welches an die Reaktionsscheibe in Anlage gelangt, in eine axiale Translationsbewegung geführt ist.

5. Servomotor nach einem der vorhergehenden Ansprüche, **dadurch gekennzeichnet, dass** das Wärmedehnungseiement (48) röhrenförmig ist und die Schubstange (32) äußerlich umgibt.

6. Servomotor nach den Ansprüchen 4 und 5, **dadurch gekennzeichnet, dass** das Wärmedehnungselement (48) auf der Seite der Schubstange (32) an das ringförmige Teil (36) in Anlage gelangt.

7. Servomotor nach einem der Ansprüche 1 bis 4, **dadurch gekennzeichnet, dass** das Wärmedehnungselement (48) in einem röhrenförmigen Abschnitt (52) der Schubstange angebracht ist und von einem Zapfen (54) axial durchquert wird, welcher fest mit der Schubstange verbunden ist und an die Reaktionsscheibe (30) in Anlage gelangt.

8. Servomotor nach Anspruch 7, **dadurch gekennzeichnet, dass** das Wärmedehnungselement (48) einem Anlageelement (58) zugeordnet ist, welches zwischen dem Wärmedehnungselement (48) und dem ringförmigen Teil (36) um den Zapfen (54) herum angebracht ist.

9. Servomotor nach einem der Ansprüche 4 bis 8, **dadurch gekennzeichnet, dass** das ringförmige Teil (36) ein weiteres zylindrisches Ende (40) zur Führung des vorgenannten Tauchkolbens (28) in eine axiale Translationsbewegung aufweist.

10. Servomotor nach einem der Ansprüche 2 bis 9, **dadurch gekennzeichnet, dass** das ringförmige Teil (36) aus Federstahl besteht.
